# EUROPÄISCHE PATENTANMELDUNG

(11) **EP 4 357 001 A1**
(43) Veröffentlichungstag der Anmeldung: **24.04.2024**
(21) Anmeldenummer: 23204014.7
(22) Anmeldetag: 17.10.2023
(51) Int. Cl.: B01D 53/04, B01D 53/26, C01B 3/00

(54) **AUFBEREITUNG VON KOMPRIMIERTEM GASFÖRMIGEM WASSERSTOFF**

(30) Priorität: 18.10.2022 DE 102022127312
(71) Anmelder: Bauer Kompressoren GmbH, 81477 München (DE)
(72) Erfinder: Schöffl, Manfred, 82234 Wessling (DE)
(74) Vertreter: Weickmann & Weickmann PartmbB

(57) **Zusammenfassung**

Die vorliegende Erfindung betrifft ein System zum Aufbereiten von gasförmigem Wasserstoff, umfassend einen Eingang (10a) zum Zuführen von gasförmigem Wasserstoff, eine Trocknungseinheit (30) mit einem aktiven Trocknungsmaterial zum Entfernen von Feuchtigkeit aus dem zugeführtem Wasserstoff, eine Adsorptionseinheit (50) mit einem aktiven Adsorptionsmaterial zum Adsorbieren von Verunreinigungen aus dem getrockneten Wasserstoff und einen Ausgang (10b) zum Entnehmen von aufbereitetem Wasserstoff. Erfindungsgemäß liegt das Massenverhältnis zwischen dem aktiven Trocknungsmaterial und dem aktiven Adsorptionsmaterial im Bereich von 1,5 : 1 bis 50 : 1. Ferner betrifft die Erfindung eine Anlage zum Bereitstellen von komprimiertem aufbereitetem gasförmigem Wasserstoff, umfassend ein derartiges System, sowie ein Verfahren zum Aufbereiten von gasförmigem Wasserstoff.

## Beschreibung

Die vorliegende Erfindung betrifft ein System zum Aufbereiten von gasförmigem Wasserstoff, eine Anlage zum Bereitstellen von komprimiertem aufbereitetem gasförmigem Wasserstoff und ein Verfahren zum Aufbereiten von gasförmigem Wasserstoff, welches beispielsweise mittels eines derartigen Systems und/oder einer derartigen Anlage durchgeführt werden kann.

In vielerlei Anwendungen gilt gasförmiger Wasserstoff als wichtiger und zukunftsträchtiger Rohstoff, der nicht nur beispielsweise in der chemischen Industrie, sondern zunehmend auch als Medium zum Speichern von Energie eingesetzt werden soll. Hierbei besteht beispielsweise die Möglichkeit, in Spitzenzeiten der Erzeugung von Elektrizität mittels regenerativer Energien, beispielsweise zur Zeit einer erhöhten Sonneneinstrahlung auf Photovoltaikanlagen oder einer erhöhten Produktion von elektrischer Energie in Windkraftanlagen, die überschüssige elektrische Energie zur Elektrolyse von Wasser oder ähnlichen elektrochemischen Prozessen einzusetzen, bei welchen Wasserstoff gewonnen wird. In derartigen Prozessen wird gasförmiger Wasserstoff erzeugt, welcher anschließend eingelagert bzw. in Gasspeicher abgefüllt oder unmittelbar weiterverwendet werden kann.

Sollte er zu Speicherung von Energie vorgesehen sein, so kann dieser Wasserstoff später entweder in dezentralen Vorrichtungen verwendet werden, beispielsweise wasserstoffgetriebenen Fahrzeugen, oder kann seinerseits wieder verstromt werden, um Zeiträume einer niedrigeren Stromerzeugung mittels regenerativen Energien ausgleichen zu können. Hierzu können beispielsweise Brennstoffzellen zum Einsatz kommen, die bereits zum jetzigen Zeitpunkt in einigen Automobilmodellen verbaut sind und mittels Hochdruck-Wasserstofftanks versorgt werden.

Hierbei zeigt sich jedoch, dass der für derartige Anwendungen nutzbare Wasserstoff aufgrund der hohen Empfindlichkeit von Brennstoffzellen gegenüber Verunreinigungen eine möglichst hohe Reinheit aufzuweisen hat, wobei die Reinheit des hierfür verwendbaren Wasserstoffs beispielsweise in den Normen DIN EN 17124 (Wasserstoff als Kraftstoff - Brennstoffzellenanwendung für Straßenfahrzeuge) bzw. ISO 14687 (Quality characteristics of hydrogen fuel for utilization in vehicular and stationary applications) festgeschrieben ist.

Hierbei zeigt sich, dass verschiedene Verunreinigungen von zur Verfügung stehendem bzw. frisch gewonnenem Wasserstoff besonders relevant sein können, die vor einer Abfüllung oder Weiterverarbeitung davon daraus entfernt werden müssen. Dies betrifft einerseits in dem Wasserstoffgas enthaltene Feuchtigkeit, die insbesondere bei der oben bereits angesprochenen elektrolytischen Auftrennung von Wasser in Wasserstoff und Sauerstoff prozessbedingt in dem Wasserstoffgas enthalten sein wird, während ferner insbesondere beim Einsatz von ölgeschmierten Kompressoren zur Verdichtung des Wasserstoffs ebenfalls zu erwarten ist, dass entsprechende Verunreinigungen, wie beispielsweise Kohlenwasserstoffe, in einem gewissen Maße in den Wasserstoff eingebracht werden können und folglich zu einem späteren Zeitpunkt wieder entfernt werden müssen.

Es ist demzufolge die Aufgabe der vorliegenden Erfindung, ein System und ein Verfahren bereitzustellen, mittels welcher insbesondere mittels Elektrolyse erzeugter und durch einen ölgeschmierten Kompressor verdichteter Wasserstoff in einer wirtschaftlichen Weise in einem derartigen Maße aufbereitet werden kann, dass er zur Verwendung in Anwendungen geeignet ist, welche höchste Reinheitsanforderungen an den Wasserstoff stellen.

Hierzu wird gemäß einem ersten Aspekt der vorliegenden Erfindung zunächst einmal ein System zum Aufbereiten von gasförmigem Wasserstoff vorgeschlagen, umfassend einen Eingang zum Zuführen von gasförmigem Wasserstoff, eine Trocknungseinheit mit einem aktiven Trocknungsmaterial zum Entfernen von Feuchtigkeit aus dem zugeführten Wasserstoff, eine Adsorptionseinheit mit einem aktiven Adsorptionsmaterial zum Adsorbieren von Verunreinigungen aus dem getrockneten Wasserstoff und einen Ausgang zum Entnehmen von aufbereitetem Wasserstoff. Erfindungsgemäß liegt hierbei das Massenverhältnis zwischen dem aktiven Trocknungsmaterial und dem aktiven Adsorptionsmaterial im Bereich von 1,5 : 1 bis 50 : 1.

Hierbei ist zu beachten, dass sowohl das aktive Trocknungsmaterial der Trocknungseinheit als auch das aktive Adsorptionsmaterial der Adsorptionseinheit jeweilige Sättigungsgrenzen aufweisen, d.h. dass sie abhängig von ihrer Masse nur eine bestimmte Menge an Fremdsubstanzen aufnehmen können, bevor ihre Effizienz nachlässt und schließlich nicht mehr für eine ausreichende Aufbereitung des Wasserstoffgases ausreicht. Durch das erfindungsgemäße Massenverhältnis zwischen den beiden aktiven Materialien wird in einfacher und effizienter Weise sichergestellt, dass ein kontinuierlicher Betrieb des Systems bis zu einer Sättigung der Trocknungseinheit möglich ist, ohne dass eine Sättigungsgrenze der Adsorptionseinheit erreicht würde.

Der erfindungsgemäße Wertebereich beruht hierbei insbesondere darauf, dass durch die vorliegenden Erfinder mittels umfangreicher Simulationen übliche Bereiche von Feuchtewerten in gasförmigem Wasserstoff bei seinem Eintritt in ein entsprechendes System dahingehend ausgewertet wurden, dass ein optimales aufzubereitendes Gasvolumen für sowohl die Trocknungseinheit als auch die Adsorptionseinheit erzielt werden kann, was einen wirtschaftlichen und zuverlässigen Betrieb des erfindungsgemäßen Systems ermöglicht. Gleichzeitig kann eine Überdimensionierung des aktiven Adsorptionsmaterials der Adsorptionseinheit in dem erfindungsgemäßen System vermieden werden, was ebenfalls die Möglichkeit zu einer günstigeren und wirtschaftlicheren Auslegung des Systems schafft.

Hierbei ist es erfindungsgemäß unerheblich, ob der aufzubereitende gasförmige Wasserstoff bereits verdichtet, d.h. bei einem erhöhten Druck an dem Eingang des Systems in dieses eingegeben wird oder ob der hierzu vorgesehene Verdichter stromabwärts der Trocknungseinheit angeordnet ist, was zu einer Trennung des Systems in einen Niederdruck- und einen Hochdruckbereich führt, zwischen welchen der Verdichter platziert ist. In diesem Zusammenhang sei auch bereits auf die Anlage gemäß dem zweiten Aspekt der vorliegenden Erfindung verwiesen, die weiter unten ausführlich diskutiert werden wird und welche selbst den entsprechenden Verdichter umfasst.

Hierbei kann erfindungsgemäß die Trocknungseinheit als aktives Trocknungsmaterial ein an sich bekanntes Molekularsieb umfassen, welches in dem gasförmigen Wasserstoff enthaltende Feuchtigkeit bindet. Insbesondere kann es sich um ein hygroskopisch vorgetrocknetes Molekularsieb handeln, wobei jedoch auch zu alternativen Trocknungsmitteln gegriffen werden könnte, wie zum Beispiel Silikagele. Derartige Trocknungseinheiten haben jedoch in jedem Fall eine typabhängige und massenabhängige Trocknungskapazität bzw. Sättigungsgrenze, die nicht überschritten werden darf, um die geforderte Reinheit des aufbereiteten Wasserstoffs sicherstellen zu können.

In ähnlicher Weise kann erfindungsgemäß die Adsorptionseinheit als aktives Adsorptionsmaterial Aktivkohle umfassen, die dazu geeignet ist, im Gasstrom befindliche Verunreinigungen zu adsorbieren. Auch die Adsorptionseinheit hat hierbei eine maximale Aufnahmekapazität für derartige Verunreinigungen, die letztlich das hierdurch maximal aufbereitbare Gasvolumen festlegt. Nachdem die Kapazität der Adsorptionseinheit erschöpft ist, muss das entsprechende aktive Adsorptionsmaterial ersetzt werden, beispielsweise, indem eine das Material enthaltende Patrone getauscht wird oder in größeren Anlagen das als Schüttgut vorliegende aktive Adsorptionsmaterial selbst ersetzt wird. Ähnliches gilt in gleicher Weise für das aktive Trocknungsmaterial, welches bei Erreichen seiner Sättigungsgrenze ebenfalls zu ersetzen ist.

Um die Qualität bzw. Reinheit des getrockneten Wasserstoffs zu überwachen, kann erfindungsgemäß stromabwärts der Trocknungseinheit wenigstens ein Druck-Taupunktsensor vorgesehen sein, welcher den momentanen Druck-Taupunkt des von ihm untersuchten Wasserstoffgases überwacht und entsprechende Daten ausgibt. Diese Daten können wiederum verwendet werden, um in Echtzeit festzustellen, ob eine ausreichende Trocknung des Wasserstoffgases stattgefunden hat oder ob beispielsweise die Trocknungseinheit ihre Kapazitätsgrenze erreicht hat und demzufolge eine nicht akzeptable Menge an Restfeuchtigkeit in dem Wasserstoffgas verblieben ist. Indem auf diese Weise eine Überwachung des Wasserstoffgases hinsichtlich seiner Reinheit in Echtzeit stattfinden kann, können aufwendige Probeentnahmen mittels Prüfflaschen und anschließende Qualitätsauswertungen des aufbereiteten gasförmigen Wasserstoffs in einem externen Labor vermieden werden. Derartige Qualitätsauswertungen sind neben ihrem hohen Kostenaufwand zudem aufgrund dessen nachteilig, dass jeweils nur eine Momentaufnahme zum Zeitpunkt der Probenentnahme dargestellt werden kann, ohne den fortlaufenden Betrieb der entsprechenden Anlage insgesamt abzudecken. Dementsprechend stellt die durch das Bereitstellen eines Druck-Taupunktsensors in dem erfindungsgemäßen System geschaffene Möglichkeit zur Überwachung der Gasqualität in Echtzeit einen erheblichen Fortschritt zur Qualitätssicherung des aufbereiteten Wasserstoffs dar.

Erfindungsgemäß kann ferner alternativ oder zusätzlich ein weiterer Druck-Taupunktsensor vorgesehen sein, welcher stromaufwärts der Trocknungseinheit angeordnet ist. Hierdurch können weitere Datenpunkte hinsichtlich der Wirkung der Trocknungseinheit gesammelt werden, da auf diese Weise der Feuchtigkeitsgehalt des Wasserstoffgases vor dem Eintritt in die Trocknungseinheit ebenfalls bekannt wird. Somit kann einerseits die Qualität des zugeführten Wasserstoffs am Eingang des Systems überwacht werden und andererseits die Wirkung der Trocknungseinheit weiter spezifiziert werden.

Hierbei kann das System beispielsweise ferner eine Steuereinheit umfassen, welche zum Empfang der angesprochenen Sensordaten mit dem wenigstens einen Druck-Taupunktsensor gekoppelt und dazu eingerichtet sein kann, bei einem Überschreiten eines vorbestimmten Druck-Taupunkt-Schwellenwerts eine vorbestimmte Maßnahme auszulösen. Hierbei kann als derartige vorbestimmte Maßnahme beispielsweise das Ausgeben einer Warnung oder ein unmittelbares Stilllegen der entsprechenden Anlage vorgesehen sein und es können auch mehrere vorbestimmte Druck-Taupunkt-Schwellenwerte definiert werden, welche jeweils unterschiedliche derartige Maßnahmen auslösen.

Zur weiteren Sicherstellung der geforderten Gasqualität sowie eines sicheren Betriebs in dem erfindungsgemäßen System kann dieses ferner wenigstens eines aus den Folgenden umfassen:
- eine stromaufwärts oder stromabwärts der Trocknungseinheit angeordnete Mikroabscheidungseinheit;
- eine stromabwärts der Adsorptionseinheit angeordnete Nachtrocknungseinheit;
- einen stromabwärts der Adsorptionseinheit und ggf. der Nachtrocknungseinheit angeordneten Partikelfilter;
- ein stromabwärts der Adsorptionseinheit und ggf. der Nachtrocknungseinheit und/oder des Partikelfilters angeordnetes Mindestdruckventil;
- eine stromaufwärts des Ausgangs angeordnete Druckentlastungseinheit.

Die eben genannten zusätzlich in dem erfindungsgemäßen System vorsehbaren Komponenten leisten hierbei weitere Beiträge zur Aufbereitung des Wasserstoffgases bzw. zum sicheren Betrieb des Systems. Insbesondere kann die Mikroabscheidungseinheit beispielsweise als Koaleszenzabscheider ausgeführt sein und im Gasstrom befindliche tropfenförmige Aerosole oder auch Feuchtigkeit abscheiden. Hierbei kann die anfallende Feuchtigkeit über eine Kondensat-Ablassautomatik oder manuell über einen Kondensat-Ablasshahn in einen großvolumigen Kondensat-Sammelbehälter geführt werden, um dort eingelagert und im Rahmen einer regelmäßigen Wartung aus den zur Umgebung gasdichten Anlagen von einem Bediener manuell ausgeschleust werden.

Die der Adsorptionseinheit nachgeschaltete Nachtrocknungseinheit kann vorgesehen sein, da aktive Adsorptionsmaterialien, wie insbesondere Aktivkohle, stets eine herstellungsprozessbedingte Restfeuchte besitzen, die während des Durchgangs des getrockneten Wasserstoffs durch die Adsorptionseinheit teilweise von diesem aufgenommen werden kann. Dementsprechend kann mittels der Nachtrocknung die so frei gewordene Restfeuchte aus der Adsorptionseinheit selbst adsorbiert werden und damit sichergestellt werden, dass insbesondere nach einem Wechsel des aktiven Adsorptionsmaterials, welches zu Beginn seines Lebenszyklus noch eine erhöhte Restfeuchte aufweist, kein Feuchtigkeitseintrag aus dem aktiven Adsorptionsmaterial in den am Ausgang des Systems zur Verfügung gestellten Gasstrom gelangt und mögliche Prozessbeeinträchtigungen in nachfolgenden Komponenten oder Anwendungen verursacht.

Nach einem ähnlichen Prinzip kann ein stromabwärts der Adsorptionseinheit vorgesehener Partikelfilter in sicherer Weise feste Partikel oder Stäube aus dem Wasserstoffgas an dieser Stelle entfernen, die aus dem aktiven Trocknungsmaterial und/oder dem aktiven Adsorptionsmaterial in stromaufwärtigen Komponenten in den Gasstrom gelangt sein können.

Ein zusätzliches Vorsehen eines Mindestdruckventils kann dazu dienen, eine erforderliche Verweilzeit des aufzubereitenden gasförmigen Wasserstoffs in den vorgeschalteten Komponenten, wie beispielsweise der Trocknungseinheit und der Adsorptionseinheit, sicherzustellen, damit die entsprechende Aufbereitung in der gewünschten Weise betriebssicher abläuft. Ferner kann das Einstellen eines Mindestdrucks in vorgeschalteten Komponenten einem Bersten bzw. Zerstäuben der aktiven Materialien und damit einem Zusetzen der entsprechenden Komponenten insbesondere bei schnellen Druckabfällen in nachgeschalteten Anwendungsbereichen vorbeugen.

Um bei einer Wartung des erfindungsgemäßen Systems, beispielsweise bei einem Erreichen der Sättigung eines der aktiven Materialien sowie einer notwendigen Erneuerung davon, eine sichere und gefahrlose Druckentlastung der Aufbereitungsstrecke des Systems durchführen zu können, kann die angesprochene Druckentlastungseinheit vorgesehen werden. Hierbei kann auf an sich bekannte Bauteile zurückgegriffen werden, die üblicherweise für derartige Zwecke zum Einsatz kommen, beispielsweise ein Manometer, ein Druckentlastungsventil bzw. ein Sicherheitsventil.

Gemäß einem zweiten Aspekt betrifft die vorliegende Erfindung eine Anlage zum Bereitstellen von komprimiertem aufbereiteten Wasserstoff, umfassend einen Verdichter zum Verdichten von zugeführtem gasförmigen Wasserstoff und ein System zum Aufbereiten des verdichteten gasförmigen Wasserstoffs der eben beschriebenen erfindungsgemäßen Art. Hierbei kann der Verdichter stromaufwärts oder stromabwärts der Trocknungseinheit angeordnet sein, sodass entweder in einem Rohzustand angelieferter Wasserstoff oder bereits getrockneter Wasserstoff durch den Verdichter an der entsprechenden Stelle verdichtet werden kann.

Um die gewünschten hohen Drücke des Wasserstoffs erzielen zu können, die beispielsweise bei einem Abfüllen davon in einen Druckspeicher gewünscht sein können, kann der Verdichter mehrstufig ausgeführt sein, beispielsweise als Verdränger-Verdichter mit einem Betriebsdruck von bis zu 350 bar oder höher und/oder dem Verdichter kann wenigstens ein Wärmetauscher zugeordnet sein, wobei ggf. ein Wärmetauscher jeder der Verdichterstufen nachgeschaltet sein kann, wobei zudem auch eine Abscheidereinheit nach den Wärmetauschern nach jeder der Verdichterstufen vorgesehen sein kann, was die weitere Verdichtung in nachfolgenden Verdichterstufen vereinfacht und bereits zu einer Kondensation von in dem Wasserstoff enthaltener Feuchtigkeit führen kann, die dann entsprechend abgeführt werden kann.

Weiterhin kann die erfindungsgemäße Anlage eine Anlagen-Steuereinheit umfassen, welche dazu eingerichtet ist, bei einem Feststellen eines Überschreitens des wenigstens einen vorbestimmten Druck-Taupunkt-Schwellenwerts den Verdichter außer Betrieb zu setzen. Hierbei versteht sich, dass die Anlagen-Steuereinheit mit der oben angesprochenen Steuereinheit des erfindungsgemäßen Systems zum Aufbereiten des Wasserstoffs betriebsmäßig gekoppelt sein kann oder die beiden Steuereinheiten ggf. in einer einzigen Steuereinheit integriert sein können. Weiterhin soll nicht ausgeschlossen sein, dass bei einem Überschreiten des vorbestimmten Druck-Taupunkt-Schwellenwerts auch noch andere Maßnahmen getroffen werden können, wie beispielsweise eine Öffnung eines Spülventils, um ein Abfüllen von unzureichend aufbereitetem Wasserstoff in jedem Fall zuverlässig verhindern zu können.

Gemäß einem dritten Aspekt betrifft die vorliegende Erfindung ferner ein Verfahren zum Aufbereiten von gasförmigem Wasserstoff mittels eines geeigneten Systems, insbesondere eines erfindungsgemäßen Systems, ggf. integriert in einer erfindungsgemäßen Anlage jeweils der oben beschriebenen Art, umfassend die Schritte eines Eingebens des gasförmigen Wasserstoffs an einem Eingang des Systems, eines Entfernens von Feuchtigkeit aus dem zugeführten Wasserstoff in einer Trocknungseinheit, eines Adsorbierens von Verunreinigung aus dem getrockneten Wasserstoff in einer Adsorptionseinheit und eines Entnehmens von aufbereitetem Wasserstoff an einem Ausgang. Hierbei kann der aufbereitete Wasserstoff entweder in geeignete Druckspeicher abgefüllt werden oder beispielsweise einem nachgeschalteten Prozess zugeführt werden, in welchem er weiterverwendet wird.

Wie bereits weiter oben angedeutet, kann in dem erfindungsgemäßen Verfahren bei einem Überschreiten wenigstens eines vorbestimmten Druck-Taupunkt-Schwellenwerts eine vorbestimmte Maßnahme ausgelöst werden, insbesondere kann bei einem Überschreiten eines ersten vorbestimmten Druck-Taupunkt-Schwellenwerts eine Warnung ausgegeben werden, beispielsweise mittels einer optischen Anzeige oder eines akustischen Signals, und bei einem Überschreiten eines zweiten vorbestimmten Druck-Taupunkt-Schwellenwerts kann eine Stilllegung des Systems und/oder der Anlage veranlasst werden.

Wie ebenfalls bereits weiter oben angedeutet, kann der aufbereitete Wasserstoff nach einem Durchführen des erfindungsgemäßen Verfahrens den Anforderungen der DIN EN 17124 bzw. der ISO 14687 genügen und/oder das erfindungsgemäße Verfahren kann ein Komprimieren des Wasserstoffs auf einen Druck von bis zu 350 bar oder höher umfassen.

Weitere Merkmale und Vorteile der vorliegenden Erfindung werden aus der nachfolgenden Beschreibung von Ausführungsformen davon noch deutlicher, wenn diese zusammen mit den beiliegenden Figuren betrachtet wird. Diese zeigen im Einzelnen:
- Fig. 1A: ein Prozess-Flussdiagramm einer ersten Ausführungsform einer erfindungsgemäßen Anlage;
- Fig. 1B: ein Prozess-Flussdiagramm einer zweiten Ausführungsform einer erfindungsgemäßen Anlage; und
- Fig. 2: eine schematische Darstellung von verschiedenen Komponenten der erfindungsgemäßen Anlagen aus den Figuren 1A und 1B.

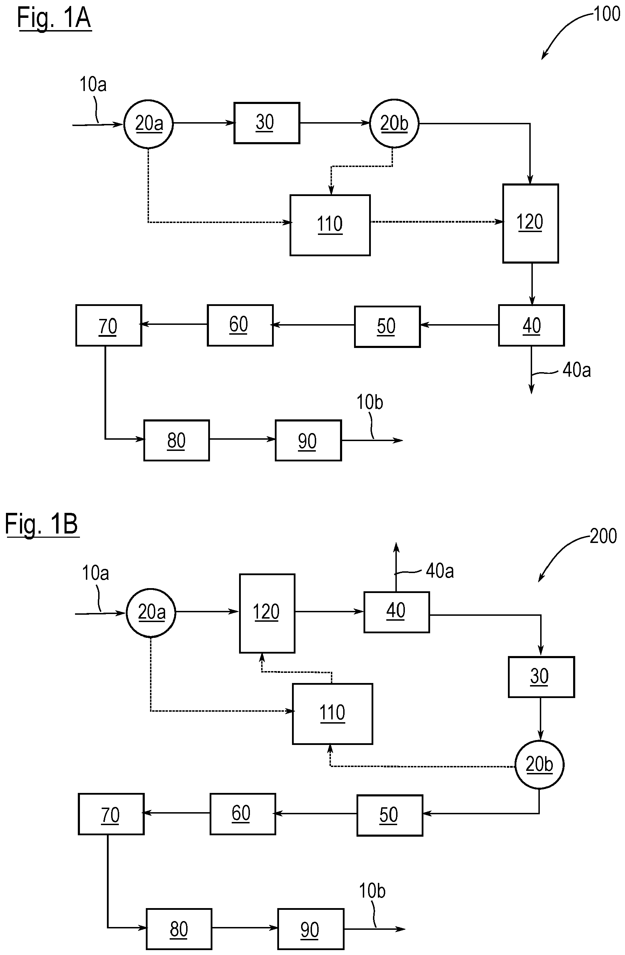

In Figur 1A ist eine erste Ausführungsform einer erfindungsgemäßen Anlage mittels eines Prozess-Flussdiagramms dargestellt und ganz allgemein mit dem Bezugszeichen 100 bezeichnet. Hierbei wird bei einem Eingang 10a gasförmiger Wasserstoff in die Anlage 100 eingegeben, der beispielsweise mittels Elektrolyse von Wasser erzeugt worden ist. Hierbei wird zunächst einmal mittels eines ersten Druck-Taupunktsensors 20a der Druck-Taupunkt des angelieferten Wasserstoffs bestimmt, bevor der Wasserstoff zu einer Trocknungseinheit 30 geliefert wird. In dieser Trocknungseinheit 30 ist ein aktives Trocknungsmaterial zum Entfernen von Feuchtigkeit aus dem zugeführten Wasserstoff vorgesehen, wobei nach dem Schritt des Trocknens mittels eines zweiten Druck-Taupunktsensors 20b das Ergebnis des Trocknungsschritts nachvollzogen werden kann.

Zu diesem Zweck sind die beiden Taupunktsensoren 20a und 20b mit einer Steuereinheit 110 der Anlage 100 gekoppelt, die dazu eingerichtet ist, die von den beiden Taupunktsensoren 20a und 20b gelieferten Daten dahingehend zu überprüfen, ob der Trocknungsschritt in der gewünschten Weise ausgeführt worden ist und nicht beispielsweise die Trocknungseinheit 30 bereits gesättigt ist. Ferner kann auf diese Weise auch bereits der Feuchtigkeitsgehalt des angelieferten Wasserstoffs überwacht werden und bei einem Überschreiten eines vorbestimmten akzeptablen Werteberichs geeignete Maßnahmen ergriffen werden. Des Weiteren ist die Steuereinheit 110 mit dem im Folgenden angesprochenen Verdichter 120 gekoppelt und kann dazu eingerichtet sein, bei einem Überschreiten von wenigstens einem vorbestimmten Druck-Taupunkt-Schwellenwert, insbesondere bei dem Taupunktsensor 20b, den Verdichter 120 stillzulegen, um ein Verdichten von nicht ausreichend gereinigtem Wasserstoff zu verhindern

An den zweiten Taupunktsensor 20b schließt sich nun der eben erwähnte Verdichter 120 an, der beispielsweise als mehrstufiger Verdichter ausgeführt sein kann, wobei zwischen den einzelnen Verdichtungsstufen wiederum Wärmetauscher zum Kühlen des verdichteten Wasserstoffs als auch Abscheidereinheiten zum Absondern von flüssigen Aerosolbestandteilen im Gasstrom vorgesehen sein können. Das derart verdichtete Wasserstoffgas wird nunmehr einer finalen Mikroabscheidungseinheit 40 zugeführt, in welcher sich tröpfchenförmige Aerosole und Feuchtigkeit niederschlagen, die bei dem Pfeil 40a zwischengespeichert und anschließend aus der Anlage 100 entnommen werden können.

Stromabwärts der Mikroabscheidungseinheit 40 ist anschließend eine Adsorptionseinheit 50 vorgesehen, in welcher ein aktives Adsorptionsmaterial zum Adsorbieren von Verunreinigungen aus dem getrockneten Wasserstoff aufgenommen ist, beispielsweise Aktivkohle innerhalb einer wechselbaren Patrone oder als selbst wechselbares Schüttmaterial. Hieran schließt sich eine Nachtrocknungseinheit 60 an, welche insbesondere nach einem Austausch des aktiven Adsorptionsmaterials in der Adsorptionseinheit 50 zunächst einmal darin enthaltene Restfeuchte aufnehmen kann, die in das gereinigte Wasserstoffgas übergangen war.

In ähnlicher Weise ist nach der Nachtrocknungseinheit 60 ein Partikelfilter 70 vorgesehen, welcher möglicherweise an dieser Stelle in dem Wasserstoffgas verbleibende Feststoffpartikel ausfiltern kann, die beispielsweise aus der Adsorptionseinheit mitgerissen worden sein können. Hieran schließt sich stromabwärts nun ein Mindestdruckventil 80 an, welches dazu dient, eine erforderliche Verweilzeit des Wasserstoffs in den vorgeschalteten Komponenten, insbesondere der Trocknungseinheit 30 und der Adsorptionseinheit 50, sicherzustellen.

Zuletzt umfasst die Anlage 100 vor ihrem Ausgang 10b, an welchem das aufbereitete komprimierte Wasserstoffgas entnommen werden kann, noch eine Druckentlastungseinheit 90, welche eine sichere und gefahrlose Druckentlastung in der Anlage 100 in an sich bekannter Weise ermöglicht. Hierbei bilden innerhalb der Anlage 100 die Komponenten Eingang 10a, Druckpunkt-Tausensoren 20a und 20b, Trocknungseinheit 30, Mikroabscheidungseinheit 40, Adsorptionseinheit 50, Nachtrocknungseinheit 60, Partikelfilter 70, Mindestdruckventil 80, Druckentlastungseinheit 90 und Ausgang 10b ein erfindungsgemäßes System zum Aufbereiten von Wasserstoff, wobei die Steuereinheit 110 hinsichtlich ihrer Funktionalität wenigstens teilweise ebenfalls dem System zurechenbar ist.

Eine alternative zweite Ausführungsform einer erfindungsgemäßen Anlage ist ferner in Figur 1 B gezeigt und mit dem Bezugszeichen 200 bezeichnet, wobei bezüglich der Beschreibung ihrer einzelnen Komponenten auf die eben beschriebene erste Ausführungsform Bezug genommen sein soll. Insbesondere sind in der Anlage 200 die exakt selben Komponenten wie in der Ausführungsform aus Figur 1A vorgesehen, jedoch in einer abgewandelten Reihenfolge angeordnet.

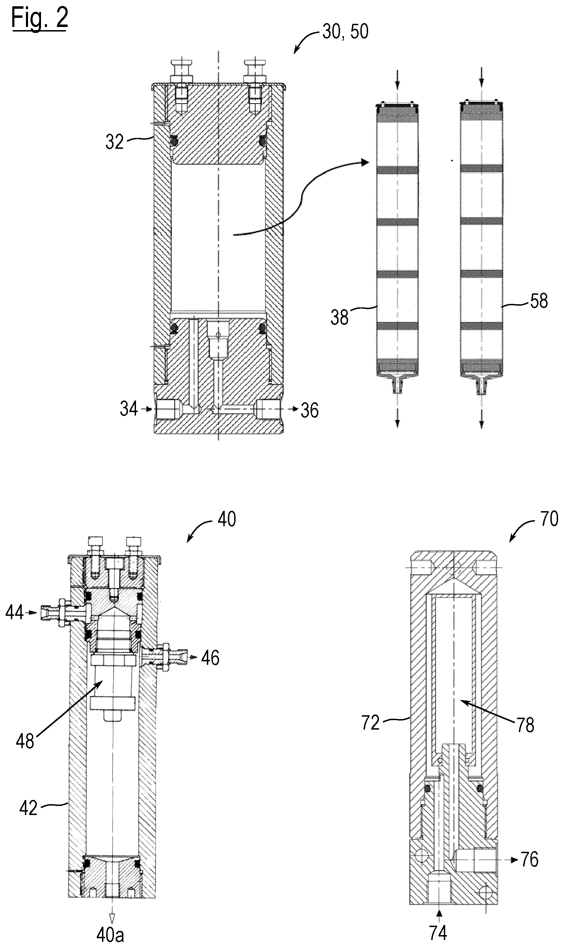

Hierbei sei insbesondere darauf hingewiesen, dass in der Ausführungsform 200 aus Figur 2 anschließend an den ersten Drucktaupunktsensor 20a unmittelbar der Verdichter 120 angeordnet ist, sodass bereits komprimierter gasförmiger Wasserstoff der Trocknungseinheit 30 zugeführt wird. Während dementsprechend in der Ausführungsform aus Figur 1 die Trocknungseinheit 30 und die Adsorptionseinheit 50 stromaufwärts bzw. stromabwärts des Verdichters 120 vorgesehen sind, d.h. in einem Niederdruckbereich bzw. einem Hochdruckbereich der Anlage 100, so liegen bei der Ausführungsform aus Figur 1B sowohl die Trocknungseinheit 30 als auch die Adsorptionseinheit 50 stromabwärts des Verdichters 120, also in einem Hochdruckbereich.

Hierbei ist jedoch festzuhalten, dass in beiden der gezeigten Ausführungsformen aus den Figuren 1A und 1B in gleicher Weise sowohl das erfindungsgemäße Massenverhältnis zwischen dem aktiven Trocknungsmaterial der Trocknungseinheit 30 und dem aktiven Adsorptionsmaterial der Adsorptionseinheit 50 im selben Bereich von zwischen 1,5 : 1 und 50 : 1 liegt, als auch durch das Vorsehen der Druck-Taupunktsensoren 20a und 20b eine Überwachung des Gasqualität des Wasserstoffs in der beschriebenen Weise möglich ist.

Ferner soll darauf hingewiesen sein, dass nicht in allen möglichen Ausführungsformen sämtliche der eben beschriebenen Komponenten unbedingt vorliegen müssen. Beispielsweise könnte bei einem Einsatz eines aktiven Adsorptionsmaterials, welches nicht dazu neigt, Restfeuchtigkeit an den Gasstrom abzugeben, auf das stromabwärtige Vorsehen einer Nachtrocknungseinheit verzichtet werden. Weiterhin sei darauf hingewiesen, dass in weiteren möglichen Varianten von erfindungsgemäßen Anlagen auch noch einmal andere Reihenfolgen der entsprechenden Komponenten vorliegen können. Beispielsweise könnten die Trocknungseinheit 30 und die Adsorptionseinheit 50 unmittelbar hintereinander angeordnet sein, wobei in diesem Fall sogar eine Integration der beiden Einheiten beispielsweise in einem einzelnen Gehäuse oder gar einer einzelnen Patrone denkbar wäre, wenn die entsprechenden aktiven Materialien in geeigneter Weise hintereinander in Strömungsrichtung des Wasserstoffgases angeordnet werden.

Zur weiteren Erläuterung der in den Anlagen 100 und 200 verwendeten Komponenten sei ferner auf die Fig. 2 verwiesen, in welcher verschiedene Komponenten davon schematisch in Querschnittsansichten dargestellt sind, insbesondere die Trocknungseinheit 30 bzw. die Adsorptionseinheit 50, der Mikroabscheider 40 und der Partikelfilter 70.

Hierbei sei darauf verwiesen, dass die Trocknungseinheit 30 bzw. die Adsorptionseinheit 50 in ähnlicher Weise jeweils durch einen Druckfilterbehälter gebildet sein können, wie er in Fig. 2 oben dargestellt ist. Dieser umfasst ein drucksicheres Gehäuse 32 mit einem Eingang 34 und einem Ausgang 36, wobei in das Gehäuse 32 eine entsprechende Patrone einsetzbar ist. Indem entweder eine mit einem Molekularsieb oder einem anderen geeigneten Trocknungsmittel, beispielsweise Silikagel, gefüllte Trocknungspatrone 38 oder eine beispielsweise mit Aktivkohle gefüllte Adsorptionspatrone 58 in das Gehäuse 32 eingesetzt wird, kann dementsprechend auf diese Weise entweder die Trocknungseinheit 30 oder die Adsorptionseinheit 50 ausgeführt werden. Dementsprechend können in den Anlagen 100 bzw. 200 zwei ähnlich aufgebaute Druckfilterbehälter verwendet werden, welche je nach Bestückung mit einer entsprechenden Patrone als die Trocknungseinheit 30 und die Adsorptionseinheit 50 wirken.

Hierbei wirkt die entsprechende Komponenten in beiden Fällen derart, dass der durch den Eingang 34 eintretende Gasstrom frei nach oben strömt und anschließend durch die Schichten des Molekularsiebs bzw. der Aktivkohle nach unten hindurchläuft, die in den entsprechenden Patronen 38 bzw. 58 vorgesehen sind. Anschließend tritt das derart aufbereitete Wasserstoffgas an dem Ausgang 36 wieder aus dem Gehäuse 32 aus und kann in der nächsten Komponente der Anlage weiterbehandelt werden. An dieser Stelle soll ebenfalls erwähnt sein, dass in bestimmten Varianten der erfindungsgemäßen Anlage auch eine derartige Integration der Trocknungseinheit 30 und der Adsorptionseinheit 50 vorgesehen werden kann, dass die in Fig. 2 gezeigten oberen Schichten der entsprechenden Patrone, welche von dem Wasserstoffgas zuerst durchströmt werden, das aktive Trocknungsmaterial enthalten und die unteren Schichten das aktive Adsorptionsmaterial. Auf diese Weise können beide Komponenten in einem einzelnen Gehäuse 32 untergebracht werden, was einerseits Platz und Kosten spart, andererseits jedoch nur einen gemeinsamen Austausch der beiden aktiven Materialien erlaubt und damit weniger flexibel ist. Der Vollständigkeit halber soll an dieser Stelle auch noch erwähnt sein, dass in alternativen Ausführungsformen, insbesondere in größeren Anlagen, anstelle der hier dargestellten Patronen auch aktive Trocknungs- und Adsorptionsmaterialien in Form von Schüttgut in entsprechenden Behältern zum Einsatz kommen können.

In Fig. 2 unten links ist der Mikroabscheider 40 in einer ähnlichen Art und Weise dargestellt. Auch dieser umfasst ein Gehäuse 42 mit einem Eingang 44 und einem Ausgang 46, sowie einen in dem Gehäuse 42 angeordneten Koaleszenzfilter 48. Dieser trennt die in dem Gasstrom enthaltenen Aerosole von der Gasphase ab, sodass der gereinigte Gasstrom an dem Ausgang 46 entnommen und der nächsten Komponente der Anlage 100 bzw. 200 zugeführt werden kann, während sich die Aerosole an dem Behälterboden ansammeln und wie weiter oben bereits angesprochen an dem Punkt 40a zu einem geeigneten Zeitpunkt entnommen werden können.

Zuletzt ist in Fig. 2 unten rechts der Partikelfilter 70 dargestellt, welcher ebenfalls ein Gehäuse 72, einen Eingang 74 und einen Ausgang 76 umfasst. Ganz ähnlich wie in der Trocknungseinheit 30 sowie der Adsorptionseinheit 50 tritt hierbei das zu reinigende Wasserstoffgas von unten her in das Gehäuse 72 ein, strömt frei nach oben, passiert eine Filterpatrone, welche mit einem geeigneten Filtermedium bestückt ist, und verlässt den Partikelfilter 70 anschließend über den Ausgang 76, um anschließend der nächstfolgenden Komponente der Anlage 100 bzw. 200 zugeführt werden zu können.

## Patentansprüche

1. System zum Aufbereiten von gasförmigem Wasserstoff, umfassend:
- einen Eingang (10a) zum Zuführen von gasförmigem Wasserstoff;
- eine Trocknungseinheit (30) mit einem aktiven Trocknungsmaterial zum Entfernen von Feuchtigkeit aus dem zugeführtem Wasserstoff;
- eine Adsorptionseinheit (50) mit einem aktiven Adsorptionsmaterial zum Adsorbieren von Verunreinigungen aus dem getrockneten Wasserstoff; und
- einen Ausgang (10b) zum Entnehmen von aufbereitetem Wasserstoff;
wobei das Massenverhältnis zwischen dem aktiven Trocknungsmaterial und dem aktiven Adsorptionsmaterial im Bereich von 1,5 : 1 bis 50 : 1 liegt.

2. System nach Anspruch 1,
wobei die Trocknungseinheit (30) als aktives Trocknungsmaterial ein Molekularsieb oder alternative Trocknungsmaterialien, wie beispielsweise Silikagele, umfasst.

3. System nach Anspruch 1 oder 2,
wobei die Adsorptionseinheit (50) als aktives Adsorptionsmaterial Aktivkohle umfasst.

4. System nach einem der vorhergehenden Ansprüche,
ferner umfassend wenigstens einen Druck-Taupunktsensor (20b), welcher stromabwärts der Trocknungseinheit (30) angeordnet ist.

5. System nach einem der vorhergehenden Ansprüche,
ferner umfassend wenigstens einen weiteren Druck-Taupunktsensor (20a), welcher stromaufwärts der Trocknungseinheit (30) angeordnet ist.

6. System nach Anspruch 4 oder 5,
ferner umfassend eine Steuereinheit (110), welche zum Empfang von Sensordaten mit dem wenigstens einen Druck-Taupunktsensor (20a, 20b) gekoppelt und dazu eingerichtet ist, bei einem Überschreiten eines vorbestimmten Druck-Taupunkt-Schwellenwerts eine vorbestimmte Maßnahme auszulösen.

7. System nach einem der vorhergehenden Ansprüche,
ferner umfassend:
- eine stromaufwärts oder stromabwärts der Trocknungseinheit (30) angeordnete Mikroabscheidungseinheit (40); und/oder
- eine stromabwärts der Adsorptionseinheit (50) angeordnete Nachtrocknungseinheit (60); und/oder
- einen stromabwärts der Adsorptionseinheit (50) und ggf. der Nachtrocknungseinheit (60) angeordneten Partikelfilter (70); und/oder
- einen stromabwärts der Adsorptionseinheit (50) und ggf. der Nachtrocknungseinheit (60) und/oder des Partikelfilters (70) angeordnetes Mindestdruckventil (80); und/oder
- eine stromaufwärts des Ausgangs angeordnete Druckentlastungseinheit (90).

8. Anlage (100, 200) zum Bereitstellen von komprimiertem aufbereitetem gasförmigem Wasserstoff, umfassend:
- einen Verdichter (120) zum Verdichten von zugeführtem gasförmigem Wasserstoff; und
- ein System zum Aufbereiten des verdichteten gasförmigen Wasserstoffs nach einem der vorhergehenden Ansprüche,
wobei der Verdichter (120) stromaufwärts oder stromabwärts der Trocknungseinheit (30) angeordnet ist.

9. Anlage (100; 200) nach dem vorhergehenden Anspruch,
wobei der Verdichter (120) mehrstufig ausgeführt ist; und/oder
wobei dem Verdichter (120) wenigstens ein Wärmetauscher zugeordnet ist, ggf. ein Wärmetauscher jeder der Verdichterstufen nachgeschaltet;
und/oder eine Abscheidereinheit zum Absondern von flüssigen Aerosolbestandteilen im Gasstrom nach den Wärmetauschern vorgesehen ist.

10. Anlage (100; 200) nach einem der Ansprüche 7 und 8,
ferner umfassend eine Anlagen-Steuereinheit (110), welche dazu eingerichtet ist, bei einem Feststellen eines Überschreitens des vorbestimmten Druck-Taupunkt-Schwellenwerts den Verdichter (120) außer Betrieb zu setzen.

11. Verfahren zum Aufbereiten von gasförmigem Wasserstoff mittels eines Systems zum Aufbereiten von verdichtetem gasförmigem Wasserstoff, vorzugsweise nach einem der Ansprüche 1 bis 7, ggf. in einer Anlage (100; 200) nach einem der Ansprüche 8 bis 10,
umfassend die Schritte:
- Eingeben des gasförmigen Wasserstoffs an einem Eingang (10a) des Systems;
- Entfernen von Feuchtigkeit aus dem zugeführtem Wasserstoff in einer Trocknungseinheit (30) des Systems;
- Adsorbieren von Verunreinigungen aus dem getrockneten Wasserstoff in einer Adsorptionseinheit (50) des Systems; und
- Entnehmen von aufbereitetem Wasserstoff an einem Ausgang (10b) des Systems.

12. Verfahren nach dem vorhergehenden Anspruch,
ferner umfassend bei einem Überschreiten wenigstens eines vorbestimmten Druck-Taupunkt-Schwellenwerts, Auslösen einer vorbestimmten Maßnahme.

13. Verfahren nach dem vorhergehenden Anspruch,
wobei bei einem Überschreiten eines ersten vorbestimmten Druck-Taupunkt-Schwellenwerts eine Warnung ausgegeben wird und bei einem Überschreiten eines zweiten vorbestimmten Druck-Taupunkt-Schwellenwerts eine Stilllegung des Systems und/oder der Anlage (100; 200) veranlasst wird.

14. Verfahren nach einem der Ansprüche 11 bis 13,
wobei der aufbereitete Wasserstoff den Anforderungen der DIN EN 17124 bzw. ISO 14687 genügt.

15. Verfahren nach einem der Ansprüche 11 bis 14,
umfassend ein Komprimieren des Wasserstoffs auf einen Druck von bis zu 350 bar oder höher.
